# EUROPEAN PATENT APPLICATION

(11) **EP 4 827 062 A1**
(43) Date of publication of application: **21.10.2026**
(21) Application number: 25736208.7
(22) Date of filing: 02.01.2025
(51) Int. Cl.: H04L 41/082

(54) **INFORMATION PROCESSING METHOD AND APPARATUS, COMPUTER-READABLE STORAGE MEDIUM AND DEVICE**

(30) Priority: 02.01.2024 CN 202410007685
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: DENG, Lingli, Beijing 100053 (CN); HE, Keguang, Beijing 100053 (CN); JIN, Di, Beijing 100053 (CN)
(74) Representative: Novagraaf Technologies
(86) International application number: PCT/CN2025/070286
(87) International publication number: WO 2025/146107

(57) **Abstract**

Disclosed in the embodiments of the present application are an information processing method and apparatus, a computer-readable storage medium and a device. The method comprises: on the basis of a general information model and a domain information model which are used for policy management, analyzing a policy instance and/or executing a policy instance, wherein the general information model is used for describing common features of policies in different domains and/or different levels, and the domain information model is used for describing the information related to policy operation environments and/or interactions in each domain.

## Description

### CROSS-REFERENCE TO RELATED APPLICATION

The application is filed based upon and claims priority to Chinese Patent Application No. 202410007685.6 filed on January 2, 2024, the disclosure of which is hereby incorporated by reference in its entirety.

### TECHNICAL FIELD

The present disclosure relates to the technical field of communications, and more particularly to, a method and device for information processing, a computer-readable storage medium and a device.

### BACKGROUND

The "autonomous network" was born in response to development of digital-intelligent society. Through digital-intelligent transformation and upgrading of network operations and maintenance itself, the "autonomous network" meets the higher requirements of digital-intelligent products for network experience and agile support, and pulls information services to a new level. It aims to build automated and intelligent operations and maintenance capabilities for the entire lifecycle of the network, to provide new network and Information and Communication Technology (ICT) services of "zero wait, zero failure and zero touch" for users and customers in vertical industries, and build digital-intelligent operations and maintenance capabilities of "self-configuration, self-repair and self-optimization" for the smart operations and maintenance of the network.

Rules/policies are important features for the improvement of the capabilities of the autonomous network. At present, the average level of the entire network is L2. The typical feature of L2 is static rule injection, and the policy implementation includes an automatic closed loop including state monitoring, condition analysis and action execution. Furthermore, the autonomous network may also be divided into L3, L4, L5 and other levels. A typical feature of L3 is dynamic rule decoupling. A typical feature of L4 is Artificial Intelligence (AI)-assisted rule generation. A typical feature of L5 is adaptive evolution. Therefore, it is necessary to extend the policy management technology system of the autonomous network, so as to realize the expressions of policy rules and the enhancement of systematic management and an evolution capability.

### SUMMARY

In order to solve the technical problems existing in the related art, embodiments of the present disclosure provide a method and device for information processing, a computer-readable storage medium and a device.

In order to achieve the above object, the technical solutions in the embodiments of the present disclosure are implemented as follows.

In a first aspect, an embodiment of the present disclosure provides a method for information processing including a following operation.

A policy instance is parsed and/or the policy instance is executed based on a general information model and a domain information model for policy management. The general information model is used for describing a common characteristic of policies in different domains and/or different levels, and the domain information model is used for describing information associated with a policy execution environment and/or interaction of each domain.

In a second aspect, an embodiment of the present disclosure provides a device for information processing including an execution module. The execution module is configured to parse a policy instance and/or execute the policy instance based on a general information model and a domain information model for policy management. The general information model is configured to describe a common characteristic of policies in different domains and/or different levels, and the domain information model is configured to describe information associated with a policy execution environment and/or interaction of each domain.

In a third aspect, an embodiment of the present disclosure provides a computer-readable storage medium having stored a computer program that, when executed by a processor, implements the operations of the method for information processing.

In a fourth aspect, an embodiment of the present disclosure provides a computer device including a memory, a processor, and a computer program stored on the memory and executable on the processor. Operations of the method for information processing are implemented when the processor executes the program.

According to the method and device for information processing, the computer-readable storage medium and the device provided by the embodiments of the present disclosure, the policy instance is parsed and/or the policy instance is executed based on the general information model and the domain information model. By adopting a model-joint-based policy modeling method, the general information model and the domain information model associated with the policy execution context environment and/or interaction may be separately planned and managed for the operations and maintenance management policies across various domains, hierarchical layers, and cross-domains in the autonomous network, which can realize unified policy modeling and flexible on-demand extension, thereby enhancing the capabilities of the systematic management and the dynamic evolution.

### BRIEF DESCRIPTION OF THE DRAWINGS

FIG. 1 is a schematic flowchart of a method for information processing according to an embodiment of the present disclosure.
FIG. 2 is a schematic diagram of relationship between various information elements in a Network Functions Virtualization (NFV)-Management and Orchestration (MANO) policy information model according to an embodiment of the present disclosure.
FIG. 3 is a schematic diagram of a composition structure of a device for information processing according to an embodiment of the present disclosure.
FIG. 4 is a schematic structural diagram of a computer device according to an embodiment of the present disclosure.

### DETAILED DESCRIPTION

Before introducing the solution for information processing in the embodiments of the present disclosure, concepts associated with network management in the related art are briefly introduced firstly.

The concepts associated with the management include: management, a managed entity and a management domain, which are specifically described below.

The management is a group of processes responsible for describing, organizing, and controlling the access to and the management of the lifecycle requirements for information and organizational entities.

The managed entity is a manageable object associated with a product, a service and/or a resource.

The management domain is a domain where contents of the domain are managed using a group of general management mechanisms. The management domain is a managed entity and has three key features: 1) having a group of administrators defined to execute management operations on the managed entity included in the management domain; 2) defining a group of applications responsible for different management operations (e.g. monitoring, configuring, etc.); and 3) defining a group of general management mechanisms, e.g., policy rules, for managing a behavior of the managed entity included in the management domain.

The concepts associated with the policy include: a policy and an imperative policy, which are specifically described below.

The policy is a group of rules for managing and controlling modification and/or maintenance of states of one or more managed objects. The organization is an entity for driving the policy. The policy is a natural method for expressing behavioral rules and constraints, and subsequently automatically executing the behavioral rules and constraints. The purpose of the policy is to ensure that consistent decisions are made to govern the behavior of the system.

The imperative policy is a policy type for explicitly changing the states of a group of target objects using statements. The imperative policy clearly defines a sequence of statements that constitute the policy.

The concepts associated with the model include an information model and a policy model, which are specifically introduced below.

The information model indicates concepts associated with a particular environment in a form independent of a data repository, a data definition language, a query language, an implementation language and a protocol.

For the policy model, in various embodiments of the present disclosure, unless explicitly stated otherwise, the policy refers to one type of imperative policy, i.e. a policy composed of events, conditions, and actions. The event refers to anything (e.g., a change in the managed system and/or its environment) that occurs on a timeline and is important to the management system. The condition is a group of attributes, characteristics and/or values that are compared with a group of known attributes, characteristics and/or values, to determine a decision to be made. The action is a group of operations that may be executed on a group of managed entities and indicates transformation or processing in the system that is being modeled.

In the related art, the rules/policies are important features for the improvement of the capabilities of the autonomous network. At present, the average level of the entire network is L2. The typical feature of L2 is static rule injection, and the policy implementation includes an automatic closed loop including state monitoring, condition analysis and action execution. Furthermore, the autonomous network may also be divided into L3, L4, L5 and other levels. The typical feature of L3 is the dynamic rule decoupling, and an operations and maintenance personnel is able to dynamically edit and import policy rules according to the formalized policy specifications in the system execution stage, which means that the system needs to have the systematic management capability for the policy rules with a larger number, wider sources and more complex relationships. The typical feature of L4 is the AI-assisted rule generation, which means that the policy rules themselves are required to be automatically iterated through application monitoring and actual outcome evaluation. The typical feature of L5 is the adaptive evolution, which means that the policy rules are required to dynamically adapt to the changes in the internal and external environment of the system, and proactively evolve in a self-adaptive manner according to the dynamically evolved system goals.

It may be seen that it is necessary to extend the policy management technology system of the autonomous network, so as to realize the standardized formal expression of the policy rules, and the enhancement of the systematic management and the dynamic evolution capability.

Hereinafter, the present disclosure will be described in further detail with reference to the accompanying drawings and specific embodiments. It is apparent that the described embodiments are only part of the embodiments of the present disclosure, not all the embodiments. Based on the embodiments in the present disclosure, all other embodiments obtained by those of ordinary skill in the art without creative work shall fall within the scope of protection of the present disclosure.

In the description of the present disclosure, it is to be noted that the terms "first", "second", "third", and the like are used only for the description purpose, and are not to be understood as indicating or implying relative importance. These terms are simply used for distinguishing one element (or threshold or application or instruction or operation) from another element (or threshold or application or instruction or operation). For example, the first operation may be referred to as a second operation, and the second operation may also be referred to as a first operation without departing from the scope of the present disclosure. The first operation and the second operation are both operations, except that they are not the same operation.

The term "and/or" in the embodiments of the present disclosure refers to any and all possible combinations of one or more of the associated enumerated items. It is also to be understood that, when terms "including/containing" are used in this specification, the presence of the features, integers, steps, operations, elements, and/or components may be specified, but the presence or addition of one or more other features, integers, steps, operations, elements, and/or components, and/or groups of then is also possible.

The steps in the embodiments of the present disclosure are not necessarily processed according to the described step order, and the steps may be selectively disrupted and rearranged according to the requirements, or steps may be deleted from the embodiments, or steps may be added into the embodiments. The step description in the embodiments of the present disclosure is only an optional sequence combination, and does not represent all sequence combination of steps in the embodiments of the present disclosure, and the step sequence in the embodiments cannot be regarded as a limitation of the present disclosure.

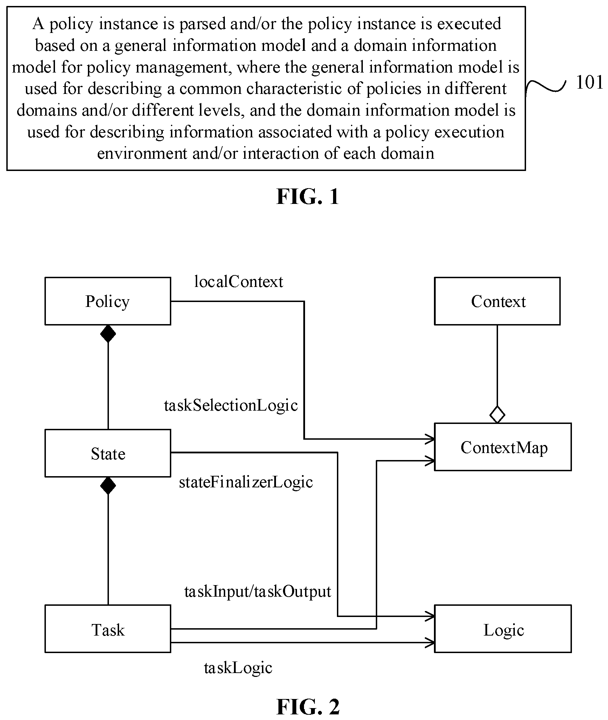

The embodiments of the present disclosure provide a method for information processing. FIG. 1 is a schematic flowchart of a method for information processing according to an embodiment of the present disclosure. As shown in FIG. 1, the method includes operation 101.

In operation 101, a policy instance is parsed and/or the policy instance is executed based on a general information model and a domain information model for policy management, where the general information model is used for describing a common characteristic of policies in different domains and/or different levels, and the domain information model is used for describing information associated with a policy execution environment and/or interaction of each domain.

In the present embodiment, both the general information model and the domain information model are concepts associated with a particular environment in a form independent of the data repository, the data definition language, the query language, the implementation language and the protocol. The general information model indicates the common characteristic of policies in different domains and/or different levels, e.g., the same characteristic of policies in different management domains, different levels, or across domains and across levels. The domain information model indicates information associated with the policy execution environment and/or interaction of each domain, e.g., information associated with the policy execution context environment, the policy execution context interaction, and the like in each management domain.

In operation 101, the policy instance is parsed based on the general information model and the domain information model; and/or the policy instance is executed based on the general information model and the domain information model. In the present embodiment, the policy instance is an instance for policy operations and maintenance management. The policy instance is parsed, which means that elements/parameters of the policy instance respectively corresponding to the general information model and the domain information model are determined. The policy instance is executed, which means that an execution engine corresponding to each domain executes the policy instances according to the elements/parameters of the policy instances respectively corresponding to the general information model and the domain information model.

According to the method for information processing in the embodiments of the present disclosure, the policy instance is parsed and/or the policy instance is executed based on the general information model and the domain information model, i.e., the model-joint-based policy modeling method is adopted, the general information model and the domain information model associated with the policy execution context environment and/or interaction may be separately planned and managed for the operations and maintenance management policies across various domains, hierarchical layers, and cross-domains in the autonomous network, which can realize unified policy modeling and flexible on-demand extension, thereby enhancing the capabilities of the systematic management and the dynamic evolution.

In an embodiment of the present disclosure, the general information model includes at least one of: intent information, basic information, directive element information, target scope information, or expected effect information.

In the present embodiment, the general information model includes, but is not limited to, information, such as, the intent information, the basic information, the directive element information, the target scope information, or the expected effect information. Exemplarily, the intent information may be used for describing an intent of a policy, and the intent is a description manner of a service where network requirements may be abstractly defined and a group of expectations regarding a network or service may be given without specifically specifying technical details. The basic information may be used for describing a name, a type, a source, a version and other information of the policy. The directive element information may be used for describing information associated with policy execution. The target scope information may be used for describing information associated with an application scope of the policy. The expected effect information may be used for describing information associated with evaluation of the performance outcome of the policy.

In some embodiments, the intent information includes at least one of: target domain information indicating a domain of policy application, object scope information indicating a managed object for the policy application, or expected outcome information indicating an expected effect of policy execution. In the present embodiment, the general information model may include, but is not limited to, intent information, e.g., the target domain information, the object scope information, and the expected effect information. The target domain information may be used for describing a domain of the policy application, e.g., a management domain type and a management domain name of the policy application. The object scope information may be used for describing a managed object for the policy application, e.g., an instance identifier of an object for the policy application. The expected outcome information may be used for describing an expected effect of the policy execution, e.g., an expected effect indicator, and the like.

As an example, the intent information may be added into a description part of the general information model.

In some embodiments, the basic information includes at least one of the following information associated with lifecycle management of the policy: a policy name, a policy type, a policy source, or version information. Exemplarily, the policy name may be a string or an identifier for uniquely identifying and accurately referencing the corresponding policy model in a particular context. The policy type may be an enumerated value or a string for distinguishing different types of imperative policies. For example, "ECA" may represent a policy with the "Event-Condition-Action" type, "MEDA" may represent a policy with the "Match-Estimate-Decide-Act" type, and the like. The policy source may be an enumerated value or a string for distinguishing imperative policies from different sources. For example, "Cloud" indicates a professional operations and maintenance personnel for the telecommunication cloud, and "RAN" indicates a professional operations and maintenance personnel for wireless, etc. The version information may be a string for specifying the update relationship between different versions of the policy. It is to be noted that the basic information may not include the policy type or a field corresponding to the policy type in the basic information is null, in this case, a default value is a default type, e.g., the "ECA" type. The basic information may not include the policy source, or a field corresponding to the policy source in the basic information is null, in this case, a default value may be a default value, e.g., "NULL (indicating empty)".

Taking the general information element Policy as an example, Table 1 is exemplary description information of parameters, associated with the basic information included in the general information model, in the general information element Policy. In Table 1, the column "Parameter" indicates parameters included in the information element; the column "Qualifier" indicates an attribute of whether each corresponding parameter is supported by the system, herein, "M" indicates mandatory support and "O" indicates optional support; the column "Cardinality" indicates the multiplicity of each corresponding parameter (i.e., the cardinality "how many" and the optionality "may or must"), herein, "1" indicates only one (the corresponding parameter is mandatory), "0..1" indicates zero or one (the corresponding parameter is optional), "1..N" indicates 1 to N (N>1) (the corresponding parameter may be defined repeatedly), and "0..N" indicates zero to N (N>1) (the corresponding parameter may be defined repeatedly); the column "Content" indicates the data type of each corresponding parameter, herein, "string" indicates a string and "Enum" indicates the enumerated type; and the column "Description" indicates description information of each corresponding parameter.

As shown in Table 1, a value of the parameter policyFunctionName may be used for describing the function or name of this policy, e.g., scaling, self-healing, and virtual resource optimization, etc., and has the value type of the string. A value of the parameter policyFlavour may be used for describing the policy type, and has a value range including {ECA, OODA, MEDA, Other}, herein, the ECA indicates the event-condition-action policy type, the OODA indicates the observe-orient-decide-act policy type, the MEDA indicates the match-estimate-decide-act policy type, and Other indicates other policy types. A value of the parameter policySource may be used for describing the policy source, and has a value type of the string. A value of the parameter policyVersion may be used for describing the version information of the policy, and has the value type of the string.

**Table 1**

| Parameter | Qualifier | Cardinality | Content | Description |
|---|---|---|---|---|
| policyFunctionName | M | 1 | String | Function or name of this policy, e.g., including scaling, self-healing, and virtual resource optimization, etc. |
| policyFlavour | M | 1 | Enum | Policy type, e.g., ECA, OODA, MEDA, etc., and a value range may include: ECA, OODA, MEDA or Other |
| policySource | M | 0..1 | String | String for identifying the policy source |
| policyVersion | M | 0..1 | String | String for identifying the version information of the policy |

In some embodiments, the directive element information includes one or more logic units for describing information associated with policy execution. Exemplarily, the logic unit is used for describing a trigger event, evaluation condition, action decision, etc. of the policy execution. The trigger event may specify trigger event set and a combination manner thereof for the imperative policy by referencing a corresponding model in a domain information model for a particular domain. The evaluation condition may specify a condition set to be evaluated and a combination manner thereof required for the action decision of the imperative policy by referencing a corresponding model in a domain information model for a particular domain. By referencing a corresponding model in the domain information model for a particular domain, the action decision may be used for making, according to the trigger event and the evaluation condition, a decision on specific operations or actions required to be executed; and may be used for changing or maintaining a particular state of the managed object.

Taking the meta-policy in the form of the ECA imperative policy as an example, the meta-policy is used for monitoring, evaluating and dynamically updating the policy. The corresponding application domain of the meta-policy consists of three sub-modules: event triggering, condition evaluation and action execution, which constitute the automatic closed loop of the meta-policy application to policy knowledge management. Taking the construction of this meta-policy with the information element as an example, the parameters, associated with the directive element information included in the general information model, in the information element include, but are not limited to: a policy element (which may be expressed as Policy), a state element (which may be expressed as State), a task element (which may be expressed as Task), a context map element (which may be expressed as ContextMap), and a context element (which may be expressed as Context), which are introduced below based on Table 2.1 to Table 2.5, respectively.

Table 2.1 shows exemplary description information of parameters, associated with the directive element information, in the policy element. In a column "Content" of Table 2.1, "ContextMap" indicates that a value of the corresponding parameter is a context map element, and "State" indicates that a value of the corresponding parameter is a state element. As shown in Table 2.1, a value of the parameter globalContext may be used for describing an execution element embodied through the system context when the policy is executed, e.g., the related system variables of the event/condition/action, and access interfaces, access parameters and access permissions of the service interface, etc. required to be used for executing the ECA policy; and the parameter globalContext has the value type of the context map element. A value of the parameter firstState may be used for describing the first state of the policy execution, e.g., the Event state of the ECA policy; and the parameter firstState has a value type of the state element.

**Table 2.1**

| Parameter | Qualifier | Cardinality | Content | Description |
|---|---|---|---|---|
| globalContext | M | 0..1 | ContextMap | For describing the execution element embodied through the system context when the policy is executed, e.g., the related system variables of the event/condition/action, or access interfaces/parameters/permissions of the service interface, etc. required to be used for executing the ECA policy |
| firstState | M | 1 | State | First state used for formulating the policy execution, e.g., the Event state of the ECA policy |

Table 2.2 shows exemplary description information of parameters, associated with directive element information, in the state element. In the column "Content" of Table 2.2, "Identifier" indicates that a value of a corresponding parameter is identifier, "Enum" indicates that a value of a corresponding parameter is an enumerated type, "Task" indicates that a value of a corresponding parameter is a task element, and "Logic" indicates that a value of a corresponding parameter is the logic element. As shown in Table 2.2, a value of a parameter stateType may indicate a type of a policy state, and may be selected based on the parameter policyFlavour included in the information element Policy shown in Table 1. The parameter stateType has the value type of the enumerated type and the value range including {Event, Condition, Action, Other}. Herein, Event indicates the event, Condition indicates the condition, Action indicates the action, and Other indicates other state types. A value of the parameter taskItem may describe information of each task included in the current state, and each state includes at least one task; and the parameter taskItem has the value type of Task. A value of the parameter taskSelectionLogic is used for describing, when the state includes more than one task, a selection logic of how to select a task from multiple tasks based on the current context to complete the state migration; and the parameter taskSelectionLogic has the value type of Logic. A value of the parameter nextState may describe an identifier of a next state.

**Table 2.2**

| Parameter | Qualifier | Cardinality | Content | Description |
|---|---|---|---|---|
| stateType | M | 1 | Enum | For indicating that a policy type state is required to be selected based on policyFlavour; and a value range may include Event, Condition, Action or Other |
| taskItem | M | 1..N | Task | For indicating information of each task included in the current state; and each state includes at least one task |
| taskSelectionLogic | M | 0..1 | Logic | For describing, when the state includes more than one task, a selection logic of how to select one task from the multiple tasks based on the current context to complete the current state migration |
| nextState | M | 0..1 | Identifier | Identifier of the next state |

Table 2.3 shows exemplary description information of parameters, associated with directive element information, in the task element. As shown in Table 2.3, a value of the parameter taskType may describe a task type. When the policy type is the ECA type, the value range is {EventTask, ConditionTask, ActionTask, Other}. Herein, EventTask indicates an event task, ConditionTask indicates a condition task, ActionTask indicates an action task, and Other indicates other task types. A value of the parameter taskInput may indicate an input parameter of the task; and the parameter taskInput has the value type of the context map. When taskType is EventTask, a value of the parameter taskInput may describe the trigger event of the policy, e.g., various alarms, prompts, reports and other events that may be collected/fed back/received by the NFV-MANO component. A value of the parameter taskLogic is used for describing a calculation logic of how to obtain the output taskOutput from the input taskInpu of the task based on the context. A value of the parameter taskOutput is used for describing the output result of task. When taskType is ActionTask, taskOutput is used for describing the policy execution action.

**Table 2.3**

| Parameter | Qualifier | Cardinality | Content | Description |
|---|---|---|---|---|
| taskType | M | 1 | Enum | For describing the task type, when policytype = ECA, the value of taskType may include EventTask, ConditionTask, ActionTask, or Other |
| taskInput | M | 0..1 | ContextMap | For describing the input parameter of task, when taskType = EventTask, taskInput is used for describing the trigger event of the policy, e.g., various alarms, prompts, reports, etc. that may be collected/fed back/received by the NFV-MANO component |
| taskLogic | M | 0..1 | Logic | For describing the calculation logic of how to obtain the output taskOutput from the input taskInpu of the task based on the context |
| taskOutput | M | 0..1 | ContextMap | For describing the output result of the task, when taskType = ActionTask, taskOutput is used for describing the policy execution action |

Table 2.4 shows exemplary description information of parameters, associated with the directive element information, in the context map element. In the column "Content" of Table 2.4, "Context" indicates that a value of a corresponding parameter is a context element. As shown in Table 2.4, a value of a parameter mapName may describe a function of the context map element. A value of the parameter contextItem may describe an included specific context variable; and the parameter contextItem has the value type of the context element.

**Table 2.4**

| Parameter | Qualifier | Cardinality | Content | Description |
|---|---|---|---|---|
| mapName | M | 1 | String | For describing the function of the context map element |
| contextItem | M | 1..N | Context | For describing the included specific context variable |

Table 2.5 shows exemplary description information of parameters, associated with the directive element information, in the context element. As shown in Table 2.5, a value of a parameter contextName may describe a function of the context element. A value of the parameter contextAccess may describe an access address of the context element. A value of the parameter contextParameter may describe an access parameter of the context element, le.g., a group of KeyValuePair (KVP) sequence requirements. Herein, the key value is the parameter name and the value is the access input parameter of the context.

**Table 2.5**

| Parameter | Qualifier | Cardinality | Content | Description |
|---|---|---|---|---|
| contextName | M | 1 | String | For describing the function of the context element |
| contextAccess | M | 1 | String | For describing the access address of the context element |
| contextParameter | M | 0..N | Not Specified (which may be defined by an extended domain information model) | For describing the access parameter of the context element, e.g., a group of KVP sequence requirements where the key value is the parameter name and the value is the access input parameter of the context |

In some embodiments, the target scope information includes one or more domains and/or managed objects for describing a scope of policy application. Exemplarily, the domains of the scope of policy application may uniquely identify and accurately reference, in a particular context by referencing a corresponding model in the domain information model for the particular domain, a particular management domain used by the policy model. The managed objects of the scope of policy application may uniquely identify and accurately reference, in a particular context by referencing a corresponding model in the domain information model for the particular domain, to a particular managed object set in the management domain used by the policy model.

Taking the information element Policy as an example, the parameters, associated with target scope information, in the information element Policy include, but are not limited to, a management domain identifier (which may be expressed as domainID), a management domain type (which may be expressed as domainType), a managed object identifier (which may be expressed as objectID), a managed object type (which may be expressed as objectType), and the like. When the related attribute does not exist, the target scope of the policy may default to the full scope of the current system (all domains/all managed objects).

Table 3 is an exemplary description information of parameters, associated with the target scope information, in the information element Policy. As shown in Table 3, a value of the parameter targetDomainType may describe the type of the management domain of the policy application. In the present embodiment, the names and meanings of all the management domains are uniformly planned by the network operator according to the actual production network. For example, union may be executed according to the combination of the geographical region, the professional field, the computer room identifier, the equipment type, etc. The default value may be the current management domain. A value scope of a parameter targetDomainType may include {RAN, TN, CN, NFV-MANO, Other}. Herein, RAN indicates an access network, TN indicates a transmission network, CN indicates a core network, NFV-MANO indicates a network functions virtualization management and orchestrator, and Other indicates other management domains. A value of a parameter targetDomainID may describe the identifier of the management domain of the policy application. A value of a parameter targetObjectType may describe the type of the managed object for the policy application, and may depend on the type of the management domain. Different types of the management domains correspond to different types of the managed objects. For example, when the value of the management domain is "RAN", the value of the type of the managed object may include "base station", "cell", "link", or others. A value of a parameter targetObjectID may describe an instance identifier of the managed object for the policy application. In the present embodiment, the names and meanings of all managed objects are uniformly planned by the network operator according to the actual production network, e.g., the device number in a unified resource management system. The number may be obtained by executing the union on the combination of the geographical area, the professional field, the computer room identifier, the equipment type, the equipment identifier, etc. The default value may be all managed objects in the current management domain.

**Table 3**

| Parameter | Qualifier | Cardinality | Content | Description |
|---|---|---|---|---|
| targetDomainType | M | 0..N | Enum | Type of the management domain of the policy application, and names and meanings of all management domains are uniformly planned by the network operator according to the actual production network. For example, union is executed according to a combination of the geographical area, the professional field, the computer room identifier, the device type, etc. The default value is the current management domain, e.g., selectable values may be RAN, TN, CN, NFV-MANO, or Other |
| targetDomainID | M | 0..N | Identifier | Identifier of the management domain of the policy application |
| targetObjectType | M | 0..N | Enum | Type of the managed object for the policy application, which depends on the type of the management domain. Different types of the management domains correspond to different types of the managed objects. For example, when the value of the management domain is "RAN", the selectable values of the type of the managed object may be: base station, cell, link, or other |
| targetObjectID | M | 0..N | Identifier | Instance identifier of the object for the policy application, and the names and meanings of all managed objects are uniformly planned by the network operator according to the actual production network, e.g., the device number in the unified resource management system (which may be obtained by executing the union on the combination of the geographical area, the professional field, the computer room identifier, the device type, the device identifier, etc.). The default value is all managed objects in the current management domain |

In some embodiments, the expected effect information includes one or more measurement indicators for describing an outcome of policy application. Exemplarily, the measurement indicator is a functional indicator, a performance indicator, an availability indicator, or the like for describing the outcome of the policy application. Herein, the functional indicator may be used for describing a functional indicator set and a combination manner of thereof expected to be achieved by the policy application through referring to a corresponding model in a particular management domain extension model; and the functional indicator may reuse a modeling manner for the evaluation condition in the directive element information. The performance indicator may be used for describing a performance indicator set and a combination manner thereof expected to be achieved by the policy application through referring to a corresponding model in a particular management domain extension mode; and the performance indicator may reuse a modeling manner for the evaluation condition in the directive element information. The availability indicator may be used for describing an availability indicator set and a combination manner thereof expected to be achieved by the policy application through referring to a corresponding model in a particular management domain extension model; and the availability indicator may reuse a modeling manner for the evaluation condition in the directive element information.

Taking the information element Policy as an example, Table 4.1 is an exemplary description information of parameters, associated with the expected effect information, in the information element Policy. As shown in Table 4.1, the parameters, associated with the expected effect information, in the information element Policy include, but are not limited to: funcExpectation, perfExpectation, stabExpectation, and the like. Herein, a value of the parameter funcExpectation may describe the expected functional indicator of the policy application; a value of the parameter perfExpectation may describe the expected performance indicator of the policy application; and a value of the parameter stabExpectation may describe the expected availability indicator of the policy application.

**Table 4.1**

| Parameter | Qualifier | Cardinality | Content | Description |
|---|---|---|---|---|
| funcExpectation | M | 0..1 | Logic | Expected functional indicator of the policy application |
| perfExpectation | M | 0..1 | Logic | Expected performance indicator of the policy application |
| stabExpectation | M | 0..1 | Logic | Expected availability indicator of the policy application |

The parameters funcExpectation, perfExpectation, and stabExpectation may describe the expected indicator evaluation conditions of the policy application through using the logic element in the domain information model. Table 4.2 is an exemplary description information of parameters, associated with the expected effect information, in logic. As shown in Table 4.2, a value of a parameter logicName may describe a function of logic, a value of a parameter logicDsl may describe a domain-specific language for implementing the logic element, e.g., Shell, Python, Java and other languages. A value of a parameter logicCode may describe logic codes implemented by a programming language with the type specified by the parameter logicDsl.

**Table 4.2**

| Parameter | Qualifier | Cardinality | Content | Description |
|---|---|---|---|---|
| logicName | M | 1 | String | Logic function description |
| logicDsl | M | 1 | String | Domain-specific language for implementing logic, e.g., Shell, Python, Java, etc. |
| logicCode | M | 1 | Not Specified | Logic code implemented by using the programming language with the type specified by logicDsl |

In an embodiment of the present disclosure, the domain information model may include at least one of: a domain information model associated with directive element information that corresponds to each domain; a domain information model associated with expected effect information that corresponds to each domain; or a domain information model associated with target scope information that corresponds to each domain. In the present embodiment, the domain information model may include, but is not limited to, three types of domain information models, i.e., the domain information model associated with directive element information that corresponds to each domain; the domain information model associated with expected effect information that corresponds to each domain; and the domain information model associated with target scope information that corresponds to each domain.

In some embodiments, the domain information model associated with the directive element information is used for providing information element definitions associated with policy execution. Exemplarily, the domain information model associated with the directive element information is used for providing all specific information element definitions associated with the directive element information that have been well defined and reliably executable in each domain, e.g., specific information element definitions associated with the trigger event, the evaluation condition and the action decision.

In some embodiments, the domain information model associated with the expected effect information is used for providing information element definitions associated with an outcome evaluation of the policy application. Exemplarily, the domain information model associated with the expected effect information is used for providing all specific information element definitions associated with expected effect information that have been well defined and reliably executable in each domain, e.g., specific information element definitions associated with a functional indicator set, a performance indicator set, an availability indicator set, and combinations thereof, etc. of the policy application.

In some embodiments, the domain information model associated with the target scope information is used for providing information element definitions associated with a scope of the policy application. Exemplarily, the domain information model associated with the target scope information is used for providing all specific information element definitions associated with target scope information that have been well defined and are reliably interfaceable through the current policy management application domain in each domain, e.g., specific information element definitions associated with the management domain and/or managed object set of the policy application.

According to the method for information processing in the embodiments of the present disclosure, the model-joint-based policy modeling method is adopted, the general information model and the domain information model may be separately planned and managed for the operations and maintenance management policies across various domains, hierarchical layers, and cross-domains in the autonomous network, which can realize unified policy modeling and flexible on-demand extension. Moreover, the intent information may be extended in the general information model, and policy modeling extension information for the target domain information (e.g., the management domain), the object scope information (e.g., the managed object), and the expected outcome information (e.g., the effect indicator, etc.) may be added; and a formal description and a registration and interaction mechanism may be provided for distributed policy modeling elements (e.g., the trigger event, the action execution and the condition evaluation), so as to provide reference indicators for the applicability and feasibility evaluation of the policy application required for dynamic automatic iteration and adaptive evolution of the policy management.

As an embodiment, the method may further include a following operation. Capability information corresponding to each of all domains is obtained. The capability information is used for determining the domain information model, and the capability information includes at least one of: an information element definition, a code implementation and a service interface that are associated with the directive element information and correspond to each domain; an information element definition, a code implementation and a service interface that are associated with the expected effect information and correspond to each domain; or an information element definition, a code implementation and a service interface that are associated with the target scope information and correspond to each domain.

In the present embodiment, capability registration corresponding to the directive element information, the expected effect information, the target scope information, and the like in each domain may also be implemented. For example, a manner where sub-management domains register their capabilities to superior management domains level by level may be adopted; or a manner of globally centralized capability registration may be adopted.

Exemplarily, the capability information associated with the directive element information is used for providing all specific information element definitions, code implementations, service interfaces and the like, associated with the directive element information, that have been well defined and reliably executable in a corresponding management domain. For example, information element definitions, code implementations, and service interfaces, etc. for describing the trigger event, the evaluation condition, the action decision, etc. The capability information associated with the expected effect information is used for providing all specific information element definitions, code implementations and service interfaces, associated with the expected effect information, that have been well defined and reliably executable in a corresponding management domain. For example, information element definitions, code implementations and service interfaces for describing the functional indicator set, the performance indicator set, the availability indicator set and combinations thereof, etc. The capability information associated with the target scope information may be used for providing all specific information element definitions, code implementations and service interfaces of all management domains/managed object set that are well defined and are reliably interfaceable through the management domain of the policy application in the corresponding management domain.

Based on the aforementioned embodiments, the embodiments of the present disclosure further provide a method for information processing. In the present embodiment, the operation that the policy instance is parsed and/or the policy instance is executed based on the general information model and the domain information model for the policy management may include following operations. A domain model instance is determined according to the domain information model, and a description part of the general information model included in the policy instance is updated. The domain model instance is used for providing a context environment and/or context interaction information of operation of the policy instance. The policy instance is parsed and/or the policy instance is executed based on the updated general information model and the domain model instance.

In the present embodiment, the domain model instance corresponding to the policy instance may be determined according to information element definitions associated with the policy execution (i.e., a domain information model associated with the directive element information), information element definitions associated with the outcome evaluation of the policy application (i.e., a domain information model associated with the expected effect information), and information element definitions associated with the scope of the policy application (i.e., a domain information model associated with the target scope information) provided by the domain information model. Moreover, the description part of the model, constructed using the general information model, in the policy instance may be updated; and the policy instance is parsed and/or the policy instance is executed based on the updated general information model and the domain model instance.

Exemplarily, information associated with a policy source, a policy version, a management domain of the policy application, a managed object for the policy application, and a policy expected effect, etc. may be added into the description part.

In some embodiments, the operation that the description part of the general information model contained in the policy instance is updated includes following operations. An intent of a policy is obtained; and corresponding intent information is added into the description part of the general information model based on the intent. The intent information includes at least one of: target domain information indicating a domain of policy application, object scope information indicating a managed object for the policy application, or expected outcome information indicating an expected effect of policy execution.

In some embodiments, parameters associated with the target domain information, the object scope information, and the expected effect information, etc. (e.g., a parameter for describing the type of the management domain, a parameter for describing an identifier of the management domain, a parameter for describing the type of the managed object, a parameter for describing an identifier of the managed object, a parameter for describing an expected functional indicator, a parameter for describing an expected performance indicator, a parameter for describing an expected availability indicator, etc.) may be added into the information element Policy shown in Table 1.

In the present embodiment, the description model of the existing imperative policy may be extended based on the intent in the general information model, and extended information for the target (e.g., the management domain), the applicable scope of the policy (e.g., the managed object), and the expected outcome (e.g., the effect indicator) may be added. On the one hand, the background knowledge is provided for identification and resolution of the potential policy conflict which is required for the systematization of the policy management. On the other hand, reference indicators are provided for monitoring and evaluating the applicability, feasibility and validity of the policy application which is required for the dynamic automatic iteration and adaptive evolution of the policy management.

In an embodiment of the present disclosure, the operation that the policy instance is parsed and/or the policy instance is executed based on the updated general information model and the domain information model includes following operations. An information element associated with at least one of: directive element information, target scope information, or expected effect information contained in corresponding policy instances is parsed based on the general information model; and a parameter value of the information element contained in the corresponding policy instance is parsed based on the domain information model.

Exemplarily, with reference to the aforementioned Table 2.1 to Table 2.5, the information elements associated with the directive element information may include the policy element, the state element, the task element, the context map element, and the context element, etc. With reference to Table 3, elements associated with the target scope information may include parameters targetDomainType, targetDomainID, targetObjectType, targetObjectID, etc. in the information element Policy. With reference to Table 4.1 to Table 4.2, information elements associated with the expected effect information may include parameters funcExpectation, perfExpectation, stabExpectation, etc. in the information element Policy.

In some embodiments, the domain model instance includes a first model instance corresponding to the context element and/or a second model instance corresponding to the logic element. The operation that the policy instance is parsed and/or the policy instance is executed based on the updated general information model and the domain model instance includes following operations. Parameters of the context element are determined by referencing the first model instance, and/or parameters of the logic element are determined by referencing the second model instance; and the policy instance is parsed and/or the policy instance is executed based on the parameters of the context element and/or the parameters of the logic element.

Exemplarily, each of the values of the parameters funcExpectation, perfExpectation, stabExpectation, and the value of the parameter taskLogic in the task element may be determined by using a corresponding logic element in the domain information model. The value of the parameter contextItem in the context map element may be determined by using a corresponding context element in the domain information model. Accordingly, the union of the general information model and the domain information model may be implemented by using the context element and the logic element.

In an embodiment of the present disclosure, the information element associated with the directive element information includes at least one of: a state element for describing state information of a policy from being triggered to being executed; a task element for describing information of each task required to be executed by a policy engine in each state of the policy; or a logic element for describing a processing logic of the policy execution engine executing each task. In the present embodiment, the logic element (Logic) may be used by the policy execution engine to parse and execute the policy task, each management domain may directly use the context element (Context) to define, according to the requirements, the specific instance of the interaction context in each domain; and use the information element Logic to define the specific logic instance of the domain policy task by using the domain-specific language. The state element and the task element may refer to Table 2.2 and Table 2.3, which will not be repeated herein.

In an embodiment of the present disclosure, the information element associated with the directive element information that is included in the domain information model further include at least one of: a context element, for describing an input/output context of each policy element, each state element, or each task element; or a context map element, for describing each context element. In the present embodiment, the element Context may be used for execution context modeling of the general information model corresponding to the policy modeling. Specifically, reference may be made to Table 2.5, which will not be repeated herein.

In an embodiment of the present disclosure, the operation that the corresponding intent information is added into the description part of the general information model based on the intent includes a following operation. The description part is updated based on the intent. The updated description part includes at least one of: a parameter for describing a domain type of the policy application; a parameter for describing a domain identifier of the policy application; a parameter for describing a managed object type of the policy application; a parameter for describing a managed object identifier of the policy application; or a parameter for describing the expected effect of the policy execution.

Exemplarily, parameters targetDomainType, targetDomainID, targetObjectType, targetObjectID, and Expectations, etc. may be added into the information element Policy shown in Table 1. A value of the parameter targetDomainType may describe a type of the domain of the policy application; a value of the parameter targetDomainID may describe an identifier of the domain of the policy application; a value of the parameter targetObjectType may describe a type of a managed object for the policy application; a value of the parameter targetObjectID may describe an identifier of the managed object for the policy application; and a value of the parameter Expectations may describe an expected effect of the policy execution.

Hereinafter, the solution for information processing in the embodiments of the present disclosure will be illustrated with reference to specific application scenarios.

FIG. 2 is a schematic diagram of relationship between various information elements in an NFV-MANO policy information model according to an embodiment of the present disclosure. As shown in FIG. 2, in the NFV-MANO policy information model, the general information model includes an information element Policy, an information element State, and an information element Task; and the domain information model includes an information element Context, an information element ContextMap, and an information element Logic. The information element Policy may reference the information element ContextMap through the parameter localContext, and the information element ContextMap may be associated with the information element Context. The information element State may reference the information element Logic through the parameters taskSelectionLogic and stateFinalizerLogic. The information element Task may reference the information element ContextMap through the parameter taskInput/taskOutput, and reference the information element ContextMap through the parameter taskLogic.

The information elements Policy, State, Task, Logic, ContextMap, and Context are introduced through Table 5.1 to Table 5.6.

Table 5.1 is an exemplary description of the parameters included in the information element Policy in this example. As shown in Table 5.1, the information element Policy is a deployment template describing the deployment of one policy, and includes the basic information required for one policy and the information of component entries for constituting the policy. Herein, a value of the parameter policyFunctionDescription may describe the functions of the corresponding policy, e.g., scaling, self-healing, virtual resource optimization, etc. A value of the parameter policyFlavour may describe an expression form of the policy, e.g., the ECA, the OODA, the MEDA, etc., and the parameter policyFlavour has the value type of the enumerated type and a value scope of {ECA, OODA, MEDA, Other}. Herein, Other indicates other expressions of the policy other than the ECA, the OODA, and the MEDA. A value of the parameter targetType may describe the scope faced by the policy. If the policy is common and applicable to all managed objects, the parameter targetType may have the value of Common. If the policy is only applied to a specific managed object, the parameter targetType may have the value of Specific. A value of the parameter firstState may be used for formulating the first state of the policy execution, e.g., the state Event of the ECA policy. A value of the parameter globalContext may be used for describing a system global context of the policy execution, e.g., the related system variables of the event/condition/action, and access interfaces/parameters/permissions of the service interface required for executing the ECA policy. A value of the parameter localContext may describe the internal context of the policy execution, and is used for executing the variable transfer/parameter sharing between different states/tasks. For example, during the operation of the ECA policy, the specific result of the condition evaluation serves as a branching condition to select the specific action to be executed.

With reference to Table 5.1, the information element Policy may be extended in the present embodiment, and the parameters policySource, policyVersion, targetDomainType, targetDomainID, targetObjectType, targetObjectID, and expectations may be added. Herein, a value of the parameter policySource may describe the policy source, and a value of the parameter policyVersion may describe the policy version information.

A value of the parameter targetDomainType may describe the type of the management domain of the policy application. In the present embodiment, names/designations and meanings of all management domains are uniformly planned by the network operator according to the actual production network. For example, joint allocation is executed according to the geographical area, the professional field, the computer room identifier, the device type, etc. and combinations thereof, and the default value is the current management domain. For example, the value range may be {RAN, TN, CN, NFV-MANO, Other}. Herein, RAN indicates the access network, TN indicates the transmission network, CN indicates the core network, NFV-MANO indicates network functions virtualization management and orchestrator, and Other indicates other types of the management domain. A value of the parameter targetDomainID may describe the identifier of the management domain of the policy application.

A value of the parameter targetObjectType may describe the type of the managed object for the policy application, which depends on the type of the management domain, i.e., different types of the management domains correspond to different managed objects. For example, when the value of the type of the management domain is "RAN", a value scope of the type of the managed object may be {base station, cell, link, other}. Alternatively, when the value of the type of the management domain is "NFV-MANO", the value scope of the type of the managed object may be {NS, VNF, VNFC, VR, Other}. Herein, NS indicates the network service, VNF indicates the virtual network function, VNFC indicates the virtual network function component, VR indicates a virtual resource, and Other indicates other types of the managed objects. A value of the parameter targetObjectID may describe the instance identifier of the object for the policy application. When targetType is Specific, the parameter targetObjectID is a mandatory parameter, and has the default value of all managed objects in the current management domain. In the present embodiment, the names/designations and meanings of all managed objects are uniformly planned by the network operator according to the actual production network, e.g., the device number in the unified resource management system (which may be obtained by executing the union on the geographical area, the professional field, the computer room identifier, the device type, the device identifier, etc., and combinations thereof).

A value of the parameter expectations may describe the expected indicators of the policy application, and may include, but are not limited to, functional indicator, performance indicator, availability indicator, and the like.

**Table 5.1**

| Parameter | Qualifier | Cardinality | Content | Description |
|---|---|---|---|---|
| policyFunctionDescription | M | 1 | String | Functions of this policy, e.g., including scaling, self-healing, virtual resource optimization, etc. |
| policyFlavour | M | 1 | Enum | Expression form of the policy, e.g., the ECA, the OODA, the MEDA, etc., and the value range is {ECA, OODA, MEDA, Other} |
| targetType | M | 1 | Enum | Scope faced by the policy and the value range may be {Common, Specific}. If the policy is common and applicable to all managed objects, the value is Common; if the policy is only applied to a specific managed object, the value is Specific |
| firstState | M | 1 | State | For formulating the first state of the policy execution, e.g., the state Event of the ECA policy |
| globalContext | M | 0..1 | Context Map | For describing the system global context of the policy execution, e.g., the related system variables of the event/condition/action, and access interfaces/parameters/permissions of the service interfaces required to be used for executing the ECA policy |
| localContext | M | 0..1 | Context Map | For describing the internal context of the policy execution, and used for executing the variable transfer/parameter sharing between different states/tasks. For example, during the operation of an ECA policy, using the specific result of a condition evaluation as a branching condition to select the specific action to be executed |
| policySource | M | 0..1 | String | String that identifies the policy source |
| policyVersion | M | 0..1 | String | String that identifies the policy version information |
| targetDomainType | M | 0..N | Enum | Type of the management domain of the policy application, names and meanings of all management domains are uniformly planned by the network operator according to the actual production network, e.g. being obtained by executing the union according to the geographical area, the professional field, the computer room identifier, the device type, etc., and combinations thereof. The default value is the current management domain, e.g., selectable values may be {RAN, TN, CN, NFV-MANO, Other} |
| targetDomainID | M | 0..N | Identifier | Identifier of the management domain of the policy application |
| targetObjectType | M | 0..N | Enum | Type of the managed object for the policy application, which depends on the type of the management domain, and different types of the management domains correspond to different types of the managed objects. For example, when the value of the management domain is "RAN", selectable values of the type of the managed object may be {base station, cell, link, other}. For another example, when the value of the management domain is "NFV-MANO", the value range may be {NS, VNF, VNFC, VR, Other} |
| targetObjectID | M | 0..N | Identifier | Being mandatory when targetType=Specific, and for describing the identifier information of the instance of the object for the policy application. The default value is all managed objects in the current management domain; and the names and meanings of all managed objects are uniformly planned by the network operator according to the actual production network, e.g., the device number in the unified resource management system (which may be obtained by executing the union on the geographical area, the professional field, the computer room identifier, the device type, the device identifier, etc. and combinations thereof) |
| expectations | M | 0..N | Logic | Expected indicators of the policy application including, but are not limited to, the functional indicator, the performance indicator, and the availability indicator, etc. |

The information element State describes the specific states of the policy from being triggered to being executed. In the context of the ECA policy expression, the event, the condition, and the action, etc., as three state examples, may be expressed by the general parameters of this information element, respectively. Table 5.2 shows exemplary description information of the parameters included in the information element State in this example. As shown in Table 5.2, a value of the parameter stateType may describe the type of the policy state; a value of the parameter taskItem may describe the information of each task included in the current state; a value of the parameter taskSelectionLogic may describe, when the state includes more than one task, the selection logic of how to select, based on the current context, a task from the tasks to complete the state migration; and a value of the parameter nextState describes the identifier of the next state.

**Table 5.2**

| Parameter | Qualifier | Cardinality | Content | Description |
|---|---|---|---|---|
| stateType | M | 1 | Enum | For indicating that a type of the policy state is required to be selected based on policyFlavour; and a value range may be {Event, Condition, Action, Other} |
| taskItem | M | 1..N | Task | For indicating information of each task included in the current state, and each state includes at least one task |
| taskSelectionLogic | M | 0..1 | Logic | For describing, when the state includes more than one task, a selection logic of how to select, based on the current context, one task from the multiple tasks to complete the current state migration |
| nextState | M | 0..1 | Identifier | Identifier of the next state |

The information element Task indicates the specific information of each task included in the policy state that is required to be executed by the policy engine. In the context of an ECA policy expression, multiple event sub-entries under an event, multiple condition sub-entries under a condition, and multiple action sub-entries under an action may be respectively expressed by the parameters of this information element. Table 5.3 shows exemplary description information of parameters in the information element Task. As shown in Table 5.3, a value of the parameter taskType may describe the task type. A value of the parameter taskInput may describe an input parameter of the task. When taskType=EventTask, taskInput may be used for describing the trigger event of the policy, e.g., various alarms, prompts, reports and other events that may be collected/fed back/received by the NFV-MANO component. A value of the parameter taskLogic is used for describing the calculation logic of how to obtain, based on the context, the output taskOutput from the input taskInpu of the task. A value of the parameter taskOutput is used for describing the output result of task. When taskType=ActionTask, taskOutput is used for describing the actions of the policy execution.

**Table 5.3**

| Parameter | Qualifier | Cardinality | Content | Description |
|---|---|---|---|---|
| taskType | M | 1 | Enum | For describing the task type, when policytype=ECA, the value scope of taskType may be {EventTask, ConditionTask, ActionTask, Other} |
| taskInput | M | 0..1 | ContextMap | For describing the input parameter of the task, when taskType=EventTask, taskInput is used for describing the trigger event of the policy, e.g., various alarms, prompts, reports, etc. that may be collected/fed back/received by the NFV-MANO component |
| taskLogic | M | 0..1 | Logic | For describing the calculation logic of how to obtain, based on the context, the output taskOutput from the input taskInpu of the task |
| taskOutput | M | 0..1 | ContextMap | For describing the output result of task, when taskType=ActionTask, taskOutput is used for describing the actions of the policy execution |

The information element Logic is used for supporting the descriptions for various types of processing logics. Table 5.4 is an exemplary description information of parameters included in the information element Logic in this example. As shown in Table 5.4, a value of the parameter logicName may describe the functions of logic; a value of the parameter logicDsl may describe the domain-specific language of the logic, e.g. Shell, Python, Java and other languages; and a value of the parameter logicCode may describe logic codes implemented by a programming language with the type specified by the logicDsl.

**Table 5.4**

| Parameter | Qualifier | Cardinality | Content | Description |
|---|---|---|---|---|
| logicName | M | 1 | String | For describing the functions of logic |
| logicDsl | M | 1 | String | For describing the domain-specific language of the logic, e.g., Shell, Python, Java, etc. |
| logicCode | M | 1 | Not Specified | Logic code implemented by using the programming language with the type specified by logicDsl |

The information element ContextMap is used for supporting input and output context descriptions for various types of policies/states/tasks. Table 5.5 is an exemplary description information of the parameters included in the information element ContextMap in this example. As shown in Table 5.5, a value of the parameter mapName may describe the functions of the context map; and a value of the parameter contextItem may describe the included specific context variables (e.g., the information element Context).

**Table 5.5**

| Parameter | Qualifier | Cardinality | Content | Description |
|---|---|---|---|---|
| mapName | M | 1 | String | For describing the function of map |
| contextItem | M | 1..N | Context | For describing the included specific context variables |

Table 5.6 shows exemplary description information of parameters included in the information element Context in this example. As shown in Table 5.6, a value of the parameter contextName may describe the functions of the context element; a value of the parameter contextAccess may describe the access address of context; and a value of the parameter contextPara may describe the access parameters of context, e.g., a group of KVP sequence requirements, herein, the key value is the parameter name and the value is the access input parameter of context.

**Table 5.6**

| Parameter | Qualifier | Cardinality | Content | Description |
|---|---|---|---|---|
| contextName | M | 1 | String | For describing the functions of context |
| contextAccess | M | 1 | String | For describing the access address of context |
| contextPara | M | 1..N | Not specified | For describing access parameters of context, e.g., a group of KVP sequence requirements, herein, the key value is the parameter name and the value is the access input parameter of context |

Taking the NFV-MANO policy information model shown in FIG. 2 as an example, a specific policy instance is constructed. It is assumed that the operations and maintenance personnel expect to use a simple automatic scaling policy, and hops to achieve the expected goal (i.e., the intent of the policy) of ensuring that the VNF usage efficiency in the computer room is less than 60%.

In the embodiments of the present disclosure, the relationship between the information elements in the NFV-MANO automatic scaling policy may be: the union of the general information model and the domain information model in this example is implemented by using the information elements Context and Logic in the general model. Specifically, Context is used for the execution context modeling of the general model for the policy modeling, the Logic is used by the policy execution engine to parse and execute the policy task, each management domain may directly use the information element Context to define, according to the requirements, the specific instance of the interaction context of each domain; and use the information element Logic and the domain-specific language to define the specific logic instance of the domain policy task.

The value of the parameter of each information element will be described below with reference to Table 6.1 to Table 6.11.

Table 6.1 shows the specific value of each parameter in the information element Policy in this example. As shown in Table 6.1, a value of the parameter firstState is EventState. Specifically, the information element State shown in Table 5.2 may be adopted. The specific values of the information element EventState may be shown in Table 6.2. The value of the parameter nextState in the information element EventState is ConditionState, and the information element State shown in Table 5.2 may also be adopted. The specific value of the information element ConditionState may be shown in Table 6.3. The value of the parameter nextState in the information element ConditionState is ActionState, and the information element State shown in Table 5.2 may also be adopted. The specific value of the information element ActionState may be shown in Table 6.4. The value of the parameter nextState in the information element ActionState is NULL.

**Table 6.1**

| Parameter/Attributes | Value |
|---|---|
| policyFunctionDescription | auto_scale |
| policyFlavour | ECA |
| targetObjectType | VNF |
| targetObjectID | NULL |
| targetDomainType | NFV-MANO |
| firstState | EventState |
| globalContext | vnfindicator.utilization |
| localContext | NULL |
| policySource | Zhangsan |
| policyVersion | 1.0.0 |
| targetDomainType | NFV-MANO |
| targetDomainID | CMCC-Beijing-Fengtai-DC1 |
| Expectations | {UtilityExpectationLogic} |

Table 6.2 shows the specific value of each parameter in the information element EventState in this example. With reference to Table 6.2, the information element EventState may reference the information element EventTask through the parameter taskItem. The information element EventTask may adopt the information element Task shown in Table 5.3. The specific values may be shown in Table 6.5.

**Table 6.2**

| Attributes | Value |
|---|---|
| stateType | Event |
| taskItem | EventTask |
| taskSelectionLogic | NULL |
| stateFinalizerLogic | NULL |
| nextState | ConditionState |

Table 6.3 shows the specific value of each parameter in the information element ConditionState in this example. With reference to Table 6.3, the information element ConditionState may reference the information element ConditionTask through the parameter taskItem. The information element ConditionTask may adopt the information element Task shown in Table 5.3. The specific values may be shown in Table 6.6.

**Table 6.3**

| Attributes | Value |
|---|---|
| stateType | Condition |
| taskItem | ConditionTask |
| taskSelectionLogic | NULL |
| stateFinalizerLogic | NULL |
| nextState | ActionState |

Table 6.4 shows the specific value of each parameter in the information element ActionState in this example. With reference to Table 6.4, the information element ActionState may reference the information element ActionTask through the parameter taskItem. The information element ActionTask may adopt the information element Task shown in Table 5.3. The specific values may be shown in Table 6.7.

**Table 6.4**

| Attributes | Value |
|---|---|
| stateType | Action |
| taskItem | ActionTask |
| taskSelectionLogic | NULL |
| stateFinalizerLogic | NULL |
| nextState | NULL |

Table 6.5 shows the specific value of each parameter in the information element EventTask in this example. With reference to Table 6.5, the information element EventTask may reference, through the parameter taskInput, the specific domain instance model vnfIndicator.utilization provided in the domain information model. The domain instance model vnfIndicator.utilization may specifically adopt the information element ContextMap shown in Table 5.5.

**Table 6.5**

| Attributes | Value |
|---|---|
| taskType | EventTask |
| taskInput | vnfIndicator.utilization |
| taskLogic | NULL |
| taskOutput | NextState |

Table 6.6 shows the specific value of each parameter in the information element ConditionTask in this example. With reference to Table 6.6, the information element ConditionTask may reference, through the parameter taskLogic, the specific domain instance model ConditionLogic provided in the domain information model. The domain instance model ConditionLogic may specifically adopt the information element Logic shown in Table 5.4, and the specific value may be shown in Table 6.8.

**Table 6.6**

| Attributes | Value |
|---|---|
| taskType | ConditionTask |
| taskInput | NULL |
| taskLogic | ConditionLogic |
| taskOutput | NextState |

Table 6.7 shows the specific value of each parameter in the information element ActionTask in this example. With reference to Table 6.7, the information element ActionTask may reference, through the parameter taskOutput, the specific domain instance model ScaleContextMap provided in the domain information model. The domain instance model ScaleContextMap may specifically adopt the information element ContextMap shown in Table 5.5, and the specific value may be shown in Table 6.9.

**Table 6.7**

| Attributes | Value |
|---|---|
| taskType | ActionTask |
| taskInput | NULL |
| taskLogic | NULL |
| taskOutput | ScaleContextMap |

Table 6.8 shows the specific value of each parameter in the information element ConditionLogic in this example. With reference to Table 6.8, the value of the parameter logicCode in the information element ConditionLogic is "(utilization_vnf_indicator>=60) and call_proc_scale_level <3)", i.e., the scaling condition in this example.

**Table 6.8**

| Attributes | Value |
|---|---|
| logicDsl | Python |
| logicCode | "(utilization_vnf_indicator> =60) and call_proc_scale_level <3)" |

Table 6.9 shows the specific value of each parameter in the information element ScaleContextMap in this example. With reference to Table 6.9, the information element ScaleContextMap may reference, through the parameter contextItem, the specific domain instance model ScaleContext provided in the domain information model. The domain instance model ScaleContext may specifically adopt the information element Context shown in Table 5.6, and the specific value may be shown in Table 6.10.

**Table 6.9**

| Attributes | Value |
|---|---|
| contextMapName | ScaleContextMap |
| contextItem | ScaleContext |

Table 6.10 shows the specific value of each parameter in the information element ScaleContext in this example. With reference to Table 6.10, the value of the parameter contextAccess in the information element ScaleContext is "Vnflcm.scale", and the value of the parameter contextPara is "type:scale_out; aspect:call_proc; number_of_steps:1".

**Table 6.10**

| Attributes | Value |
|---|---|
| contextName | scale |
| contextAccess | Vnflcm.scale |
| contextPara | "type:scale_out; aspect:call_proc; number_of_steps:1" |

With reference to Table 6.1, the information element Policy may reference, through the parameter Expectations, the domain instance model UtilityExpectationLogic in the domain information model, and the domain instance model UtilityExpectationLogic may adopts the information element Logic shown in Table 5.4. Table 6.11 shows the specific value of each parameter in the information element UtilityExpectationLogic. As shown in Table 6.11, value of the parameter logicCode is "vnfindicator.utilization<=60%", i.e., the expected goal of ensuring that the VNF utilization efficiency in the computer room is less than 60% is expected to be achieved.

**Table 6.11**

| Attributes | Value |
|---|---|
| logicDsl | Python |
| logicCode | "vnfindicator.utilization<=60%" |

In this example, the intent of the policy may be transferred to the corresponding policy through the expected effect domain model (as shown in Table 6.11), which provides reference indicators for subsequently monitoring and evaluating the applicability, feasibility and validity of the policy application.

It is to be noted that intent management provides a simplified manner for the Operation Support System/Business Support System (OSS/BSS) using the NFV-MANO services, only the NFV-related requirements and constraints are required to be specified without understanding how the NFV-MANO executes operations converted from the NFV intent. For example, an intent owner (e.g., OSS/BSS) requests to update an existing intent including an expectation of updating the Network Service (NS) instance performance, e.g., increasing/decreasing the incoming data rate of a particular Service Access point (SAP). Based on the intent expectation, the intent processor converts the updated intent into the corresponding policy, and finally executes the corresponding NS operations (e.g., extending the existing NS) through the policy, to meet the intent requirements.

In the manner of intent modeling, specific expression regarding the functional indicator set, the performance indicator set, the availability indicator set and combinations thereof, etc. may be constructed by the expectations of the general intent model. In an intent management system, the aforementioned expectations regarding the functional indicator set, performance indicator set, availability indicator set and combinations thereof, etc. are eventually converted into all specific information element definitions, code implementations, service interfaces of expected effect evaluation (the functional indicator set, the performance indicator set, the availability indicator set and combinations thereof, etc.) that reliably executable. Taking the expectation of updating the NS instance performance as an example. In this example, the expected effect is to keep the VNF efficiency not exceeding a fixed threshold, which will eventually be converted to specific information element definitions and code implementations, e.g., UtilityExpectationLogic shown in Table 6.11.

Based on the NFV-MANO policy information model shown in Table 5.1 to Table 5.6, by defining the aforementioned intent expectation, the description model of corresponding imperative policy may be extended (i.e., the description part in the general information model contained in the policy instance is updated). As shown in Table 6.1, the indicator Expectations associated with the expected effect is added, and this parameter may reference the domain information model UtilityExpectation corresponding to the defined intent expectation.

In this example, after the intent-based policy is executed, it is necessary to continuously guarantee and optimize the execution outcome. In this case, reference indicators may be provided, according to the extended performance indicator (UtilityExpectation) associated with the expected effect, for evaluating the feasibility of the policy application. Exemplarily, the domain information model of UtilityExpectation defined in the intent may be referenced based on Expectations, and the code implementations UtilityExpectationLogic corresponding to the model is used as the reference indicator of the related performance indicator, and the corresponding guarantee and optimization operation is further executed on the outcome of the policy execution according to the difference analysis between the actual outcome after the policy is executed and the reference indicator.

In this example, the model-joint-based policy modeling method is adopted. A unified model of policy modeling general elements (i.e., the general information model) and a domain-specific modeling domain model (i.e., the domain information model) associated with the interaction of the context environment of the policy execution are separately planned and managed for the operations and maintenance management policies across various domains, hierarchical layers, and cross-domains in the autonomous network, which realizes unified policy modeling and flexible on-demand extension. The description model of the existing imperative policy may be extended based on the intent in the general model, and the policy modeling extension of the target (the management domain), the applicable scope of the policy (the managed object), and the expected outcome (the effect indicator) may be added. On the one hand, the background knowledge is provided for identification and resolution of the potential policy conflict which is required for the systematization of the policy management. On the other hand, reference indicators are provided for monitoring and evaluating the applicability, feasibility and validity of the policy application which is required for the dynamic automatic iteration and adaptive evolution of the policy management. In this example, a formal description and a registration and interaction mechanism may be provided for distributed policy modeling elements (e.g., the trigger event, the action execution and the condition evaluation), so as to provide reference indicators for the applicability and feasibility evaluation of the policy application required for dynamic automatic iteration and adaptive evolution of the policy management.

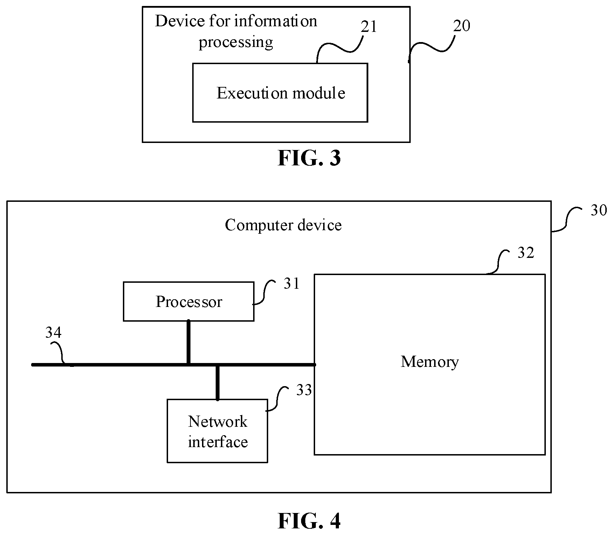

Embodiments of the present disclosure further provide a device for information processing. FIG. 3 is a schematic diagram of a composition structure of a device for information processing according to an embodiment of the present disclosure. As shown in FIG. 3, the device 20 for information processing includes an execution module 21. The execution module 21 is configured to parse a policy instance and/or execute the policy instance based on a general information model and a domain information model for policy management, where the general information model is configured to describe a common characteristic of policies in different domains and/or different levels, and the domain information model is configured to describe information associated with a policy execution environment and/or interaction of each domain.

In an embodiment of the present disclosure, the general information model includes at least one of: intent information, basic information, directive element information, target scope information, or expected effect information.

In an embodiment of the present disclosure, the intent information includes at least one of: target domain information indicating a domain of policy application, object scope information indicating a managed object for the policy application, or expected outcome information indicating an expected effect of policy execution.

In an embodiment of the present disclosure, the basic information includes at least one of the following information associated with lifecycle management of the policy: a policy name, a policy type, a policy source, or version information.

In an embodiment of the present disclosure, the directive element information includes one or more logic units for describing information associated with policy execution.

In an embodiment of the present disclosure, the target scope information includes one or more domains and/or managed objects for describing a scope of policy application.

In an embodiment of the present disclosure, the expected effect information includes one or more measurement indicators for describing an outcome of policy application.

In an embodiment of the present disclosure, the domain information model may include at least one of: a domain information model associated with directive element information that corresponds to each domain; a domain information model associated with expected effect information that corresponds to each domain; or a domain information model associated with target scope information that corresponds to each domain.

In an embodiment of the present disclosure, the domain information model associated with the directive element information is used for providing an information element definition associated with policy execution.

In an embodiment of the present disclosure, the domain information model associated with the expected effect information is used for providing an information element definition associated with an outcome evaluation of policy application.

In an embodiment of the present disclosure, the domain information model associated with the target scope information is used for providing an information element definition associated with a scope of policy application.

In an embodiment of the present disclosure, the execution module 21 is configured to: determine a domain model instance according to the domain information model, and update a description part of the general information model contained in the policy instance, where the domain model instance is used for providing a context environment and/or context interaction information of operation of the policy instance; and parse the policy instance and/or execute the policy instance based on the updated general information model and the domain model instance.

In an embodiment of the present disclosure, the execution module 21 is configured to: obtain an intent of a policy; and based on the intent, add corresponding intent information into the description part of the general information model, where the intent information includes at least one of: target domain information indicating a domain of policy application, object scope information indicating a managed object for the policy application, or expected outcome information indicating an expected effect of policy execution.

In an embodiment of the present disclosure, the execution module 21 is configured to: parse an information element associated with at least one of: directive element information, target scope information, or expected effect information contained in corresponding policy instances based on the general information model; and parse a parameter value of the information element contained in the corresponding policy instance based on the domain information model.

In an embodiment of the present disclosure, the information element associated with the directive element information includes at least one of: a state element for describing state information of a policy from being triggered to being executed; a task element for describing information of each task required to be executed by a policy engine in each state of the policy; or a logic element for describing a processing logic of the policy execution engine executing each task.

In an embodiment of the present disclosure, the information element associated with the directive element information that is included in the domain information model further include at least one of: a context element, for describing an input/output context of each policy element, each state element, or each task element; and a context map element, for describing each context element.

In an embodiment of the present disclosure, the execution module 21 is configured to: update the description part based on the intent, where the updated description part includes at least one of: a parameter for describing a domain type of the policy application; a parameter for describing a domain identifier of the policy application; a parameter for describing a managed object type of the policy application; a parameter for describing a managed object identifier of the policy application; or a parameter for describing the expected effect of the policy execution.

Inan embodiment of the present disclosure, the domain model instance includes a first model instance corresponding to the context element and/or a second model instance corresponding to the logic element, and the execution module 21 is configured to: determine a parameter of the context element by referencing the first model instance, and/or, determine a parameter of the logic element by referencing the second model instance; and parse the policy instance and/or execute the policy instance based on the parameter of the context element and/or the parameter of the logic element.

In an embodiment of the present disclosure, the device further includes a obtaining module configured to: obtain capability information corresponding to each of all domains, where the capability information is used for determining the domain information model, and the capability information includes at least one of: an information element definition, a code implementation and a service interface that are associated with the directive element information and correspond to each domain; an information element definition, a code implementation and a service interface that are associated with the expected effect information and correspond to each domain; or an information element definition, a code implementation and a service interface that are associated with the target scope information and correspond to each domain.

In the embodiment of the present disclosure, the execution module 21 in the device 20 for information processing may be implemented by a Central Processing Unit (CPU), a Digital Signal Processor (DSP), a Microcontroller Unit (MCU), or a Field-Programmable Gate Array (FPGA) in practical applications.

It is to be noted that when the device for information processing provided in the aforementioned embodiments executes information processing, the division of the aforementioned various program modules is only used as an example, in practical applications, the aforementioned processing may be allocated, according to requirements, to be completed by different program modules, i.e., the internal structure of the device may be divided into different program modules to complete all or part of the aforementioned processing. In addition, the device for information processing provided in the aforementioned embodiment belongs to the same concept as the method for information processing in the embodiments, and the specific implementation process thereof is detailed in the method embodiments, which will not be repeated herein.

The embodiments of the present disclosure further provide a computer device. FIG. 4 is a schematic structural diagram of a computer device according to an embodiment of the present disclosure. As shown in FIG. 4, the computer device 30 includes at least one processor 31, a memory 32, and at least one network interface 33. The various components in the computer device 30 are coupled together by a bus system 34. It is to be appreciated that the bus system 34 is used for implementing the connection and communication between these components. The bus system 34 includes a power bus, a control bus, and a status signal bus in addition to a data bus. However, for clarity of explanation, the various buses are denoted as the bus system 34 in FIG. 4.

It is to be understood that the memory 32 may be a volatile memory or a non-volatile memory, or may include both the volatile memory and the non-volatile memory. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a Flash Memory, a magnetic surface memory, an optical disk, or a Compact Disc Read-Only Memory (CD-ROM). The magnetic surface memory may be a magnetic disk memory or a magnetic tape memory. The volatile memory may be a Random Access Memory (RAM) and is used as an external high-speed cache. It is exemplarily but unlimitedly described that RAMs in various forms may be adopted, such as a Static Random Access Memory (SRAM), a Synchronous Static Random Access Memory (SSRAM), Dynamic Random Access Memory (DRAM), a Synchronous Dynamic Random Access Memory (SDRAM), a Double Data Rate Synchronous Dynamic Random Access Memory (DDRSDRAM), a Enhanced Synchronous Dynamic Random Access Memory (ESDRAM), a SyncLink Dynamic Random Access Memory (SLDRAM) and a Direct Rambus Random Access Memory (DRRAM). The memory 32 described in the embodiments of the disclosure is intended to include, but not limited to, these and any other suitable types of memories.

The memory 32 in the embodiments of the present disclosure is configured to store various types of data to support the operations of the computer device 30. Examples of the data include any computer program for operation on the computer device 30, such as, a program of the method for information processing according to the embodiments of the present disclosure, and the like.

The method disclosed in the aforementioned embodiments of the present disclosure may be applied to the processor 31 or may be implemented by the processor 31. The processor 31 may be an integrated circuit chip with signal processing capacity. In the implementation process, various operations of the above method may be completed by integrated logic circuits of hardware in the processor 31 or instructions in the form of software. The aforementioned processor 31 may be a general-purpose processor, a DSP, or other programmable logic devices, discrete gate or transistor logic devices, discrete hardware components, or the like. The processor 31 may implement or execute various methods, steps, and logical block diagrams disclosed in the embodiments of the disclosure. The general-purpose processor may be a microprocessor, any conventional processor, or the like. Steps of the methods disclosed with reference to the embodiments of the disclosure may be directly executed and accomplished by a hardware decoding processor, or may be executed and accomplished by a combination of hardware and software modules in the decoding processor. The software module may be located in a storage medium. The storage medium is located in the memory 32, and the processor 31 reads information in the memory 32 and completes the steps in the foregoing methods in combination with hardware of the processor.

In an exemplary embodiment, the computer device 30 may be implemented by one or more Application Specific Integrated Circuits (ASIC), DSPs, Programmable Logic Devices (PLD), Complex Programmable Logic Devices (CPLD), FPGAs, general purpose processors, controllers, MCUs, microprocessors, or other electronic components, for executing the aforementioned method.

In an exemplary embodiment, an embodiment of the present disclosure also provides a computer-readable storage medium, e.g. the memory 32 including a computer program executable by the processor 31 of the computer device 30, to complete the operations described in the aforementioned method. The computer-readable storage medium may be a memory, such as a FRAM, a ROM, a PROM, an EPROM, an EEPROM, a flash memory, a magnetic surface memory, an optical disk, or a CD-ROM. The computer-readable storage medium may also be various devices including one or any combination of the aforementioned memories, such as, a mobile phone, a computer, a tablet device, a personal digital assistant, or the like.

The methods disclosed in the method embodiments provided in this disclosure can be arbitrarily combined without conflict to obtain new method embodiments.

The features disclosed in the product embodiments provided in this disclosure can be arbitrarily combined without conflict to obtain new product embodiments.

The features disclosed in the method or apparatus embodiments provided in this disclosure can be arbitrarily combined without conflict to obtain new method embodiments or apparatus embodiments.

In the several embodiments provided in the present disclosure, it is to be understood that the disclosed device and method may be implemented in other modes. The device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections of various components may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units is separately used as one unit, or two or more units may be integrated into one unit. The aforementioned integrated unit may be implemented in the form of hardware or hardware plus software functional unit.

Those of ordinary skill in the art may understand that all or a part of the steps for implementing the aforementioned embodiments may be implemented by a program instructing a related hardware. The program may be stored in a computer-readable storage medium, and when the program is executed, the operations including the aforementioned method embodiments are executed. The aforementioned storage medium includes various media capable of storing a program code, such as, a mobile storage device, a ROM, a RAM, a magnetic disk or an optical disk.

Alternatively, if the function is implemented in the form of a software functional module and sold or used as an independent product, the integrated unit may also be stored in a computer-readable storage medium. Based on this understanding, the technical solutions of the embodiments of the present disclosure essentially or the parts that contribute to the prior art can be embodied in the form of a software product. The computer software product is stored in a storage medium, including multiple instructions for causing a computer device (which may be a personal computer, a server, or a network device, and the like) to execute all or part of the methods described in various embodiments of the disclosure. The aforementioned storage medium includes various media capable of storing a program code, such as, a mobile storage device, a ROM, a RAM, a magnetic disk or an optical disk.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A method for information processing, comprising:
parsing a policy instance and/or executing the policy instance based on a general information model and a domain information model for policy management, wherein the general information model is used for describing a common characteristic of policies in different domains and/or different levels, and the domain information model is used for describing information associated with a policy execution environment and/or interaction of each domain.

2. The method of claim 1, wherein the general information model comprises at least one of: intent information, basic information, directive element information, target scope information, or expected effect information.

3. The method of claim 2, wherein the intent information comprises at least one of:
target domain information indicating a domain of policy application;
object scope information indicating a managed object for the policy application; or
expected outcome information indicating an expected effect of policy execution.

4. The method of claim 2, wherein the basic information comprises at least one of the following information associated with policy lifecycle management:
a policy name, a policy type, a policy source, or version information.

5. The method of claim 2, wherein the directive element information comprises one or more logic units for describing information associated with policy execution.

6. The method of claim 2, wherein the target scope information comprises one or more domains and/or managed objects for describing a scope of policy application.

7. The method of claim 2, wherein the expected effect information comprises one or more measurement indicators for describing an outcome of policy application.

8. The method of claim 1, wherein the domain information model comprises at least one of:
a domain information model associated with directive element information that corresponds to each domain;
a domain information model associated with expected effect information that corresponds to each domain; or
a domain information model associated with target scope information that corresponds to each domain.

9. The method of claim 8, wherein the domain information model associated with the directive element information is used for providing an information element definition associated with policy execution.

10. The method of claim 8, wherein the domain information model associated with the expected effect information is used for providing an information element definition associated with an outcome evaluation of policy application.

11. The method of claim 8, wherein the domain information model associated with the target scope information is used for providing an information element definition associated with a scope of policy application.

12. The method of claim 1, wherein parsing the policy instance and/or executing the policy instance based on the general information model and the domain information model for the policy management comprises:
determining a domain model instance according to the domain information model, and updating a description part of the general information model contained in the policy instance, wherein the domain model instance is used for providing a context environment and/or context interaction information of operation of the policy instance; and
parsing the policy instance and/or executing the policy instance based on the updated general information model and the domain model instance.

13. The method of claim 12, wherein updating the description part of the general information model contained in the policy instance comprises:
obtaining an intent of a policy; and
based on the intent, adding corresponding intent information into the description part of the general information model, wherein the intent information comprises at least one of: target domain information indicating a domain of policy application, object scope information indicating a managed object for the policy application, or expected outcome information indicating an expected effect of policy execution.

14. The method of claim 12 or 13, wherein parsing the policy instance and/or executing the policy instance based on the updated general information model and the domain information model comprises:
parsing the information element associated with at least one of: directive element information, target scope information, or expected effect information contained in corresponding policy instances based on the general information model; and
parsing a parameter value of the information element comprised in the corresponding policy instance based on the domain information model.

15. The method of claim 14, wherein the information element associated with the directive element information comprises at least one of:
a state element for describing state information of a policy from being triggered to being executed;
a task element for describing information of each task required to be executed by a policy engine in each state of the policy; or
a logic element for describing a processing logic of the policy execution engine executing each task.

16. The method of claim 15, wherein the information element associated with the directive element information that is comprised in the domain information model further comprise at least one of:
a context element, for describing an input/output context of each policy element, each state element, or each task element; or
a context map element, for describing each context element.

17. The method of claim 16, wherein the domain model instance comprises a first model instance corresponding to the context element and/or a second model instance corresponding to the logic element, and wherein parsing the policy instance and/or executing the policy instance based on the updated general information model and the domain model instance comprises:
determining a parameter of the context element by referencing the first model instance, and/or, determining a parameter of the logic element by referencing the second model instance; and
parsing the policy instance and/or executing the policy instance based on the parameter of the context element and/or the parameter of the logic element.

18. The method of claim 13, wherein based on the intent, adding the corresponding intent information into the description part of the general information model comprises:
updating the description part based on the intent, wherein the updated description part comprises at least one of:
a parameter for describing a domain type of the policy application;
a parameter for describing a domain identifier of the policy application;
a parameter for describing a managed object type of the policy application;
a parameter for describing a managed object identifier of the policy application; or
a parameter for describing the expected effect of the policy execution.

19. The method of claim 8, further comprising:
obtaining capability information corresponding to each of all domains, wherein the capability information is used for determining the domain information model, and the capability information comprises at least one of:
an information element definition, a code implementation and a service interface that are associated with the directive element information and correspond to each domain;
an information element definition, a code implementation and a service interface that are associated with the expected effect information and correspond to each domain; or
an information element definition, a code implementation and a service interface that are associated with the target scope information and correspond to each domain.

20. A device for information processing, comprising an execution module, configured to parse a policy instance and/or execute the policy instance based on a general information model and a domain information model for policy management, wherein the general information model is configured to describe a common characteristic of policies in different domains and/or different levels, and the domain information model is configured to describe information associated with a policy execution environment and/or interaction of each domain.

21. A computer-readable storage medium having stored a computer program that, when executed by a processor, implements the method of any one of claims 1 to 19.

22. A computer device, comprising a memory, a processor, and a computer program stored on the memory and executable on the processor, wherein operations of the method of any one of claims 1 to 19 are implemented when the processor executes the program.
